# EUROPÄISCHE PATENTSCHRIFT

(11) **EP 2 359 466 B1**
(45) Veröffentlichungstag und Bekanntmachung des Hinweises auf die Patenterteilung: **08.01.2020**
(21) Anmeldenummer: 09771698.9
(22) Anmeldetag: 16.11.2009
(51) Int. Cl.: H02P 3/04, H02P 29/02, H02P 15/00, F16D 65/14, H02K 49/00, B60L 7/24

(54) **VERFAHREN ZUM BETREIBEN EINES ANTRIEBS UND ANTRIEB**
METHOD FOR OPERATING A DRIVE AND DRIVE
PROCÉDÉ DE FONCTIONNEMENT D'UN ENTRAÎNEMENT, AINSI QU'ENTRAÎNEMENT

(30) Priorität: 19.11.2008 DE 102008058303
(43) Veröffentlichungstag der Anmeldung: 24.08.2011
(73) Patentinhaber: SEW-EURODRIVE GmbH & Co. KG, 76646 Bruchsal (DE)
(72) Erfinder: GNIRSS, Bernhard, 76275 Ettlingen (DE); KOLLAR, Hans, Jürgen, 76646 Bruchsal (DE)
(86) Internationale Anmeldenummer: PCT/EP2009/008145
(87) Internationale Veröffentlichungsnummer: WO 2010/057605

(56) Entgegenhaltungen:
- EP-A- 0 575 023
- WO-A-2007/000220
- WO-A2-2005/047157
- DE-A1- 10 149 604
- DE-A1- 19 734 405
- DE-A1-102007 062 779
- US-A1- 2009 120 725

## Beschreibung

Die Erfindung betrifft ein Verfahren zum Betreiben eines Antriebs und einen Antrieb.

Es sind Antriebe bekannt, die einen Elektromotor mit Bremse umfassen, wobei der Elektromotor von einem netzgespeisten Umrichter versorgt wird.

**Aus der** EP 0 575 023 A **ist eine Ansteuerschaltung für eine gleichstrombetätigbare Bremse eines Elektromotors bekannt.**

**Aus der** WO 2007/000220 A **ist eine Vorrichtung zur Prüfung einer elektromagnetisch betätigbaren Bremse bekannt.**

**Aus der** DE 197 34 405 A1 **ist ein Verfahren zum Betreiben eines Elektromotors bekannt.**

**Aus der** DE 10 2007 062779 A1 **ist eine im ausgeschalteten Zustand aktivierte elektromagnetische Bremse bekannt.**

**Aus der** DE 101 49 604 A1 **ist ein Verfahren zur Überwachung des Betriebszustands einer elektromagnetisch betätigbaren Bremse bekannt.**

**Aus der** US 2009/120725 A1 **ist als nächstliegender Stand der Technik eine Aufzugsanordnung bekannt.**

**Aus der** WO 2005/047157 **ist eine Bremse für einen Aufzug bekannt.**

Der Erfindung liegt daher die Aufgabe zugrunde, die Sicherheit in einer einen Antrieb umfassenden Anlage zu verbessern.

Erfindungsgemäß wird die Aufgabe bei dem Verfahren zum Betreiben eines Antriebs nach den in Anspruch **10** und bei dem Antrieb nach den in Anspruch **1** angegebenen Merkmalen gelöst.

Wichtige Merkmale bei dem Antriebsystem sind, dass es einen Motor mit Rotorwelle umfasst, an der zumindest eine zumindest eine bestrombare Bremsspule umfassende Bremse angeordnet ist, die von einer elektronischen Schaltung mit Strom beaufschlagbar ist,
wobei die Spannungsversorgung ein oberes und ein unteres Potential, insbesondere Zwischenkreispotential eines Umrichters, aufweist,
wobei ein oberes und ein unteres Potential zur Versorgung einer Bremsspule vorgesehen ist,
wobei zwischen oberem Potential der Spannungsversorgung und oberem Potential zur Versorgung der Bremsspule ein von einer ersten Steuerschaltung ansteuerbarer erster Schalter angeordnet ist,
wobei zwischen unterem Potential der Spannungsversorgung und unterem Potential zur Versorgung der Bremsspule ein von einer zweiten Steuerschaltung ansteuerbarer zweiter Schalter angeordnet ist, wobei eine dritte Bremsspule zwischen unterem und oberem Potential zur Versorgung der Bremsspule angeordnet ist, wobei von den Schaltern Rückmeldesignalleitungen zu den die Schalter jeweils ansteuernden Steuerschaltungen geführt sind, insbesondere so dass eine abwechselnde Funktionsüberprüfung der Schalter ausführbar ist,
wobei eine Bremsspule einer ersten Bremse zwischen oberem Potential zur Spannungsversorgung und unterem Potential zur Versorgung der Bremsspule angeordnet ist,
wobei eine Bremsspule einer zweiten Bremse zwischen unterem Potential zur Spannungsversorgung und oberem Potential zur Versorgung der Bremsspule angeordnet ist,
wobei eine abwechselnde Funktionsüberprüfung der Bremsen ausführbar ist, insbesondere indem Werte jeweils einer Zustandsgröße der jeweiligen Bremse bestimmt werden und den jeweiligen Steuerschaltungen zugeführt werden und/oder indem Werte der Winkelstellung der Rotorwelle bestimmt werden und den jeweiligen Steuerschaltungen zugeführt werden an Mittel zum Vergleichen mit Sollwerten oder Sollwerteverläufen.

Von Vorteil ist dabei, dass die Versorgungsspannung für die Bremsspule von zwei getaktet betreibbaren Schaltern auf einen gewünschten Sollwert hin steuerbar oder regelbar ist, und dass zwei Bremsspulen jeweils mit getakteter Spannung versorgbar sind. Dabei wird die Sicherheit mittels der zwei in Reihe geschalteten und somit redundant wirksamen Schalter hergestellt und mittels der zwei redundant auf dieselbe Welle wirksamen Bremsen.

Bei einer vorteilhaften Ausgestaltung werden zumindest einer der beiden Schalter oder beide Schalter getaktet, insbesondere pulsweitenmoduliert, derart betreibbar, dass die an der Bremsspule anliegende Spannung steuerbar ist oder auf einen Sollwert hin regelbar ist. Von Vorteil ist dabei, dass bei Vorsehen von Mitteln zur Spannungserfassung die Versorgungsspannung auf einen Sollwert hin regelbar ist.

Bei einer vorteilhaften Ausgestaltung ist der Motor ein Elektromotor, insbesondere ein umrichtergespeister Elektromotor, insbesondere ein dreiphasig betreibbarer Elektromotor, wie Asynchronmotor, Synchronmotor oder Reluktanzmotor. Von Vorteil ist dabei, dass ein drehzahlregelbarer und drehmomentregelbarer Motor verwendbar ist.

Bei einer vorteilhaften Ausgestaltung ist die Versorgungsspannung Zwischenkreisspannung eines Umrichters, aus der ein Wechselrichter des Umrichters versorgbar ist. Von Vorteil ist dabei, dass eine leistungsstarke Spannungsquelle ohne zusätzlichen Aufwand verwendbar ist. Außerdem ist im generatorischen Betrieb des Umrichters Energie aus dem Zwischenkreis über die Zufuhr von Strom an die Bremsspule in Wärme überführbar ist und somit ein Überschreiten kritischer Spannungswerte erreichbar ist.

Bei einer vorteilhaften Ausgestaltung ist die maximal zulässige Betriebsspannung der Bremsspule, insbesondere die dauerhaft maximal zulässige Betriebsspannung, kleiner als die Zwischenkreisspannung. Von Vorteil ist dabei, dass trotz hoher Zwischenkreisspannung Bremsspulen mit kleinerer maximal zulässiger Betriebsspannung verwendbar sind.

Bei einer vorteilhaften Ausgestaltung sind die Steuerschaltungen zum Datenaustausch miteinander verbunden. Von Vorteil ist dabei, dass ein sicherheitsgerichteter Vergleich von Parametern der beiden Steuerschaltungen ermöglicht ist.

Bei einer vorteilhaften Ausgestaltung ist die Bremse eine derartige elektromagnetisch betätigbare Bremse, dass bei Bestromen der Bremsspule die Bremse lüftet und bei Nicht-Bestromung die Bremse einfällt. Von Vorteil ist dabei, dass das Einfallen durch eine Feder bewirkbar ist, wobei bei Bestromung die auf eine Ankerscheibe wirkende Magnetkraft die Federkraft überwindet und somit Bremsbeläge in Reibkontakt bringbar sind.

Bei einer vorteilhaften Ausgestaltung ist ein Schalter als steuerbarer Halbleiterschalter ausgeführt, insbesondere als IGBT oder MOSFET. Von Vorteil ist dabei, dass ein kostengünstiger Schalter verwendbar ist.

Wichtige Merkmale der Erfindung bei dem Verfahren sind, dass der Antrieb zumindest einen Motor, umfassend eine Rotorwelle, umfasst, die mit einem von zumindest zweier eine bestrombare Bremsspule umfassenden Bremsen erzeugten Bremsmoment beaufschlagbar ist,
wobei die Bremsspule mit zwei Schaltern, mittels derer jeweils der Spulenstrom steuerbar ist, in Reihe angeordnet ist,
wobei der erste Schalter von einer ersten Steuerschaltung und der zweite Schalter von einer zweiten Steuerschaltung angesteuert wird,
wobei für die Herstellung des unbestromten Zustandes der Bremsspule die Schalter geöffnet werden und zeitabschnittweise einer der beiden Schalter, insbesondere kurzzeitig, ein Steuersignal erhält zur Erreichung des geschlossenen Zustandes in diesem Zeitabschnitt,
wobei eine Überprüfung der Auswirkung dieses jeweiligen Steuersignals erfolgt und im Falle eines negativen Ergebnisses der Überprüfung
- eine Waminformation herausgegeben,
- und/oder der Antrieb in einen sicheren Zustand überführt wird,
- und/oder eine Abschaltung des Antriebs ausgeführt wird.

Von Vorteil ist dabei, dass der unbestromte Zustand mit hoher Sicherheit herstellbar ist, da zwei redundante Schalter angeordnet sind. Die Funktion des jeweils anderen Schalters ist durch kurzzeitige Ansteuerimpulse überprüfbar. Dabei sind die Impulse derart kurz, dass auch im Falle von funktionsgestörtem Schalter, beispielsweise Verschweißen eines Schalters, nur eine unwesentliche Bestromung der Bremsspule erfolgt, also die Bremsspule im Wesentlichen noch immer unbestromt bleibt und somit die Bremse nicht anzieht.

Bei einer vorteilhaften Ausgestaltung werden die Zustände beider Schalter rückgemeldet an die den jeweiligen Schalter ansteuernde Steuerschaltung und somit wird die Überprüfung der Auswirkung des jeweiligen Steuersignals mittels Überprüfung und/oder Vergleich des jeweiligen Rückmeldesignals mit dem jeweiligen Steuersignal ausgeführt.

Bei einer vorteilhaften Ausgestaltung werden zur Überprüfung der Auswirkung des jeweiligen Steuersignals Werte einer Zustandsgröße zumindest der Bremse bestimmt, insbesondere Spulenstromwerte, an der Spule anliegende Spannungswerte, Magnetfeldwerte,
und/oder
zur Überprüfung der Auswirkung des jeweiligen Steuersignals werden Werte des an der Rotorwelle einwirkenden Drehmoments, insbesondere Bremsmoments, und/oder Winkelgeschwindigkeitswerte der Rotorwelle bestimmt,
und die bestimmten Werte werden an die jeweilige Steuerschaltung rückgemeldet. Von Vorteil ist dabei, dass die Rückmeldung nicht von den Schaltern sondern am Abtrieb selbst, also an der Rotorwelle, bestimmbar ist.

Bei einer vorteilhaften Ausgestaltung wird für die Herstellung des bestromten Zustandes der Bremsspule in einem ersten Zeitabschnitt ein erster der Schalter geschlossen und ein zweiter wird zur Erreichung des getakteten Betriebs, insbesondere zur Erreichung des pulsweitenmodulierten Betriebs, entsprechend getaktet angesteuert,
insbesondere wobei eine Überprüfung der Auswirkung dieses jeweiligen Steuersignals erfolgt und im Falle eines negativen Ergebnisses der Überprüfung
- eine Warninformation herausgegeben,
- und/oder der Antrieb in einen sicheren Zustand überführt wird,
- und/oder eine Abschaltung des Antriebs ausgeführt wird.

Von Vorteil ist dabei, dass einerseits mittels der Taktung die mittlere Betriebsspannung steuerbar oder regelbar ist auf einen Sollwert hin und außerdem eine Funktionsüberprüfung ausführbar ist. Dabei wird die Wärme aufgespreizt an beide Schalter mittels der abwechselnden Betriebsweise. Es wird also in einem ersten Zeitabschnitt der erste Schalter getaktet betrieben und in einem zweiten Zeitabschnitt der andere Schalter. Somit ist jeder Schalter kleiner ausführbar im Vergleich zur dauerhaften Taktung nur eines Schalters.

Bei einer vorteilhaften Ausgestaltung wird für die Herstellung des bestromten Zustandes der Bremsspule in einem weiteren Zeitabschnitt der zweite der Schalter geschlossen und der erste zur Erreichung des getakteten Betriebs, insbesondere zur Erreichung des pulsweitenmodulierten Betriebs, entsprechend getaktet angesteuert,

insbesondere wobei eine Überprüfung der Auswirkung dieses jeweiligen Steuersignals erfolgt und im Falle eines negativen Ergebnisses der Überprüfung eine Warninformation herausgegeben, und/ oder der Antrieb in einen sicheren Zustand überführt wird, und/oder eine Abschaltung des Antriebs ausgeführt wird.

Von Vorteil ist dabei, dass wiederum Schalter kleinerer Leistungsgröße verwendbar sind.

**Weitere Vorteile ergeben sich aus den Unteransprüchen.**

Die Erfindung wird nun anhand von Abbildungen näher erläutert:

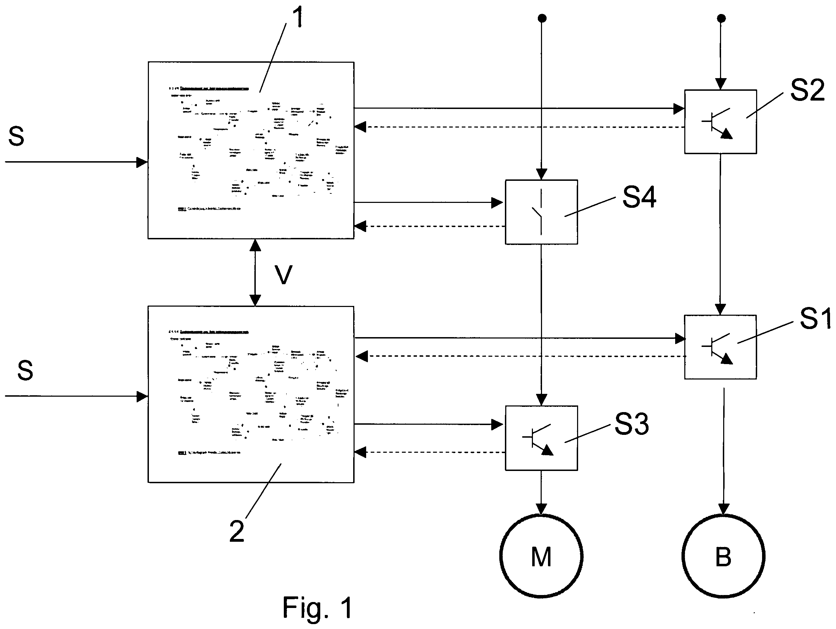

In der Figur 1 ist eine beispielhafte Bremsenansteuerung gezeigt, wobei eine Bremse mit zwei Schaltern (S1, S2) in Reihe geschaltet ist, die verschiedenen Ansteuerpfaden zugeordnet sind. Hierbei wird die Sollwertvorgabe, also beispielsweise das Lüften oder alternativ das Einfallen der Bremse betreffende Information, einer dem jeweiligen Ansteuerpfad zugeordneten Steuerung (1, 2) zugeführt, die jeweils einen Schalter zur Beeinflussung der Strom- oder Spannungsversorgung einer Bremse B und einen Schalter zur Beeinflussung der Strom- oder Spannungsversorgung eines Motors M ansteuert.

Hierbei ist also die Steuerung 1 in der Lage mittels des Schalters S2, der beispielsweise als Schütz ausführbar ist, die Spannungsversorgung für die Bremse B abzuschalten und mittels des Schalters S4, der ebenfalls beispielsweise als Schütz ausführbar ist, die Stromversorgung für den Motor M abzuschalten.

Die Steuerung 2 steuert den Schalter S1 an, der die Spannungsversorgung der Bremse B bestimmt und vorzugsweise als Halbleiterschalter ausgeführt ist. Auf diese Weise ist auch ein getaktetes Ansteuern, wie beispielsweise pulsweitenmoduliertes Ansteuern und somit Steuern oder Regeln der an der elektromagnetisch betätigbaren Bremse anliegenden Spannung ausführbar. Ebenso ist mittels des von der Steuerung 2 angesteuerten Schaltersystems S3 die elektrische Versorgung des Motors M abschaltbar. Dieses Schaltersystem S3 ist beispielsweise als Endstufe eines Wechselrichters ausführbar und pulsweitenmoduliert ansteuerbar. Auf diese Weise ist der Motor beispielsweise mit einer Drehspannung vorgebbarer Frequenz speisbar und somit seine Drehzahl regelbar. Die Endstufe ist hierbei aus drei Halbbrücken zusammengesetzt, die jeweils eine Reihenschaltung umfasst, welche aus mindestens zwei Halbleiterschaltern zusammengesetzt ist. Auf diese Weise ist mittels der Endstufe eine Drehspannung zur Speisung des Elektromotors stellbar. Als Elektromotor wird hier ein Drehstrommotor verwendet, beispielsweise ein Asynchronmotor oder ein Synchronmotor.

Somit ist insbesondere das Abschalten der Bremse B und des Motors M redundant ausführbar und die Sicherheit auf diese Weise verbesserbar.

Darüber hinaus sind die Schalter mit jeweiligen Rückmeldepfaden mit der jeweils die Schalter ansteuernden Steuerung verbunden. Auf diese Weise ist es der jeweiligen Steuerung (1, 2) ermöglicht, den Erfolg des abgegebenen Steuersignals zu überwachen, indem das Rückmeldesignal mit dem jeweiligen Ansteuersignal verglichen wird.

Des Weiteren ist ein Vergleich V zwischen Zuständen von Parametern der beiden Steuerungen (1, 2) ermöglicht. Auf diese Weise sind also auch die Steuersignale oder Rückmeldesignale der ersten Steuerung mit den in der zweiten Steuerung auftretenden Werten einer Sollwertvorgabe, eines Steuersignals oder eines Rückmeldesignals vergleichbar.

Die Sicherheit für den gesamten Antrieb, umfassend Elektromotor und Bremse, ist somit erhöhbar.

Bei weiteren erfindungsgemäßen Ausführungsbeispielen wird als Motor M im Ausführungsbeispiel nach Figur 1 ein einphasig versorgbarer Elektromotor verwendet. In diesem Fall ist das Schaltersystem S3 mit nur einem ansteuerbaren Schalter realisierbar, der die Versorgung zu- oder abschalten kann.

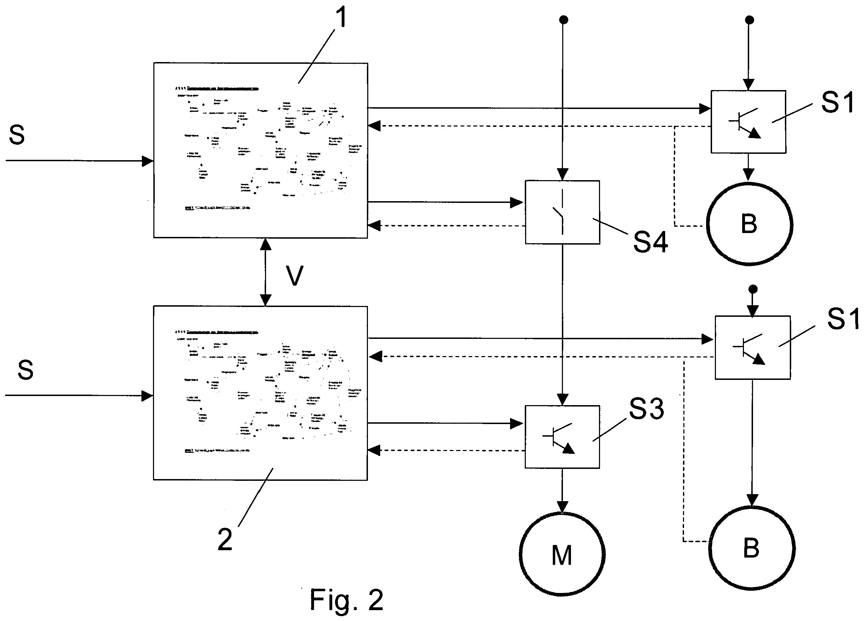

In der Figur 2 ist eine weitere beispielhafte Bremsenansteuerung gezeigt, wobei zwei Bremsen B ansteuerbar sind, deren Bremskraft auf die Rotorwelle des Motors M leitbar ist. Die Ansteuerung der Bremsen B erfolgt über einen jeweiligen Schalter S1, der die Spannungsversorgung der Bremse B bestimmt und vorzugsweise als Halbleiterschalter ausgeführt ist. Der erste Schalter S1 der ersten Bremse B, welche im oberen Teil der Figur 2 angeordnet dargestellt ist, ist von der Steuerung 1 ansteuerbar. Ebenso ist der zweite Schalter S1 der zweiten Bremse B, welche im unteren Teil der Figur 2 angeordnet dargestellt ist, ist von der Steuerung 2 ansteuerbar.

Somit ist bei dem Ausführungsbeispiel nach Figur 2 wiederum ein redundantes Bremsen ermöglicht und die Sicherheit erhöht.

Der bei Figur 1 beschriebene Vergleich ist in analoger Weise auch bei dem Ausführungsbeispiel nach Figur 2 ausführbar.

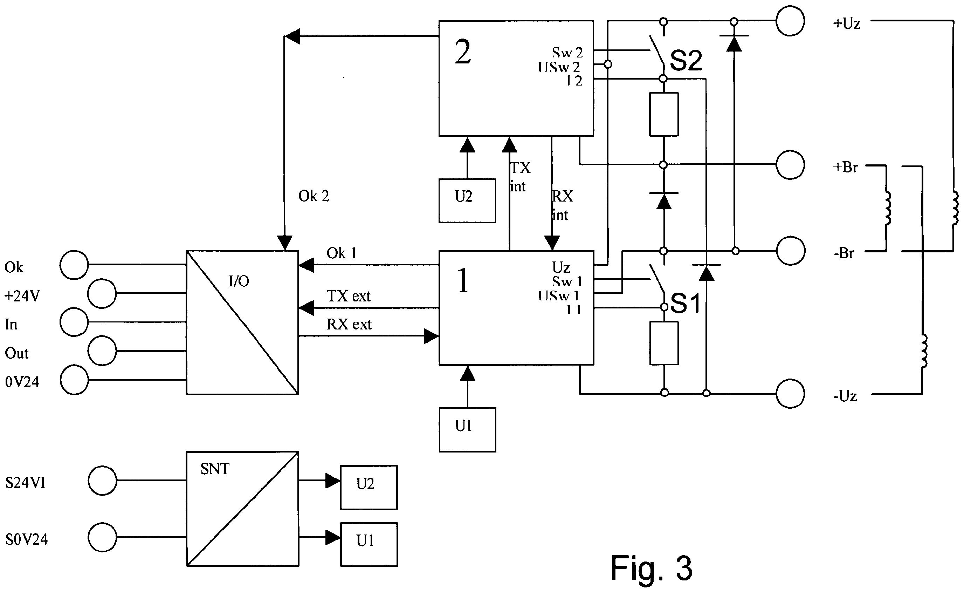

In der Figur 3 ist eine näher ausgeführte erfindungsgemäße Ansteuerung einer Bremsspule der Bremse B gezeigt. Dabei wird ein Schalter S1 von einer Steuerung 1 und ein Schalter S2 von einer Steuerung 2 angesteuert, wobei die Steuerungen (1, 2) vorzugsweise als Controller ausgeführt sind.

Die Schalter S1 und S2 schalten den Ausgang +Br beziehungsweise -Br auf das Potential +Uz beziehungsweise -Uz, wobei zum Schutz gegen Überstrom Widerstände zwischengeschaltet sind und außerdem jeweils einem Schalter (S1, S2) eine Freilaufdiode zugeordnet ist.

Der Spulenstrom einer an den Ausgängen +Br und -Br angeschlossenen Bremsspule ist somit in sicherer Weise steuerbar, da mit beiden Schaltern (S1, S2) der Spulenstrom jeweils ausschaltbar ist.

Die beiden Schalter (S1, S2) werden im unbestromten und im bestromten Zustand der Bremsspule auf ihre Funktion hin überprüft.

Hierbei werden für die Herstellung des **unbestromten Zustandes der Bremsspule** beide Schalter zunächst geöffnet. Somit ist auch bei Versagen eines der Schalter, wie beispielsweise Verschweißen oder dergleichen, eine Bestromung der Bremsspule unterbunden. Wenn also ein erster Schalter, beispielsweise Schalter S1, zum dauerhaften Öffnen angesteuert ist, ist mittels der Steuerung eine Überprüfung der Funktion des jeweils anderen Schalters, also beispielsweise des Schalters S2, ermöglicht. Hierzu wird zum Beispiel das Ansteuersignal für den anderen Schalter, also den zu überprüfenden Schalter kurzzeitig verändert und somit ein entsprechend kurzzeitiges Schließen dieses anderen Schalters bewirkt. Die Steuerung ist mit Eingängen, an denen Spannung erfassbar ist, derart mit Knotenpunkten der Reihenschaltung verbunden, dass ein entsprechend kurzzeitiger Spannungsabfall detektierbar ist und die Funktion des zu überprüfenden Schalters bestätigbar ist. Im Falle eines Funktionsversagens gibt die Steuerung eine Warninformation heraus, die beispielsweise optisch, akustisch, berührungslos oder mittels Feldbus an weitere Geräte oder Bedienpersonal gemeldet wird. Alternativ ist auch eine Abschaltung oder ein Versetzen der gesamten Anlage in einen sicheren Zustand ermöglicht.

Für die Herstellung des **bestromten Zustandes der Bremsspule** werden die beiden Schalter (S1, S2) abwechselnd getaktet, beispielsweise pulsweitenmoduliert, betrieben. Durch dieses Abwechseln ist die anfallende Verlustwärme auf die beiden Schalter aufteilbar und somit eine Aufspreizung der anfallenden Wärme erreichbar. Insgesamt sind somit kleinere Schalter einsetzbar oder eine längere Standzeit erreichbar. Außerdem ist es durch den abwechselnden Betrieb ermöglicht, die Funktion des jeweils getaktet betriebenen Schalters zu überprüfen. Dies wird wiederum von der Steuerung mit ihren Eingängen, an denen Spannung erfassbar ist, ausgeführt und - wie schon oben geschrieben - eine vom Ergebnis der Überprüfung abhängige Warninformation oder Maßnahme generiert.

Weiterer Vorteil ist auch, dass mittels der getakteten Betriebsweise verschiedene Bremsspulen versorgbar sind, die sich jeweils in der benötigten Betriebsspannung unterscheiden. Denn als Versorgungsspannung, also im Wesentlichen Differenz der Potentiale +Uz und -Uz, ist die Zwischenkreisspannung eines Umrichters verwendbar, also eine unipolare Spannung, die mittels Gleichrichtung einer den Umrichter versorgenden Netzwechselspannung erzeugt wird und aus der auch der Wechselrichter des Umrichters versorgbar ist zur Speisung des Elektromotors.

Die Betriebsspannung der Bremsspule ist beispielsweise viel kleiner als die bei abgeschaltetem Zustand des Wechselrichters erzeugte Zwischenkreisspannung. Insbesondere ist mittels der getakteten Betriebsweise die Versorgungsspannung der Bremsspule steuerbar, indem das Taktverhältnis entsprechend gesteuert oder bei Vorsehung von einem entsprechenden Spannungserfassungsmittel geregelt.

Zusätzlich ist auch eine Bremsspule zwischen dem Potential +Uz und dem Ausgang -Br und/oder eine Bremsspule zwischen dem Potential -Uz und dem Ausgang +Br anschließbar und somit deren Spulenstrom steuerbar beziehungsweise die an der Bremsspule anliegende Spannung steuerbar oder regelbar. Allerdings ist in diesem Fall nur ein einziger Schalter für den zugehörigen Spulenstrom bestimmend.

Die beiden Schalter (S1, S2) sind gemäß Ausführungsbeispiel nach Figur 3 verschiedenen Ansteuerpfaden zugeordnet und werden beide getaktet betrieben

Die die zwischen dem Potential +Uz und dem Ausgang -Br angeschlossene Bremsspule umfassende Bremse, also erste Bremse, und die die zwischen dem Potential -Uz und dem Ausgang +Br angeschlossene Bremsspule umfassende Bremse, also zweite Bremse, sind jeweils nur mittels eines einzigen Schalters ausschaltbar beziehungsweise getaktet eingeschaltet. Somit ist keine redundante Abschaltung oder Einschaltung ermöglicht. Trotzdem wird die Sicherheit dadurch erhöht und erreicht, dass die beiden Bremsen auf eine gleiche Welle wirken, nämlich die Rotorwelle des Motors. Somit ist das Abbremsen des Motors auch bei Ausfall einer der beiden Bremsen ermöglicht.

Hierzu ist die mittels einer jeweiligen Bremse erzeugbare Bremskraft entsprechend ausgelegt.

Die Bremskraft ist auch mittels eines Sensors bestimmbar und überwachbar: Für diesen Zweck ist ein Winkelsensor mit der Rotorwelle des Elektromotors verbunden, dessen Signale einer Signalelektronik eines den Motor speisenden Umrichters zugeführt werden und somit eine Drehzahlregelung oder Drehmomentenregelung beim Motor ausführbar ist. Dabei ist auch ein Modellwert für das vom Motor erzeugte Drehmoment bestimmbar und damit auch das nach Aktivieren der Bremse herrschende Bremsmoment, solange die angetriebene Last sich konstant verhält. Auf diese Weise ist daher auch ein eventueller Fehlerzustand einer Bremse detektierbar. Denn wenn das Ist-Bremsmoment nicht den gewünschten gesteuerten Verlauf erreicht und die Abweichung hiervon einen kritischen Wert überschreitet, wird eine Warninformation generiert und weitergeleitet und/oder angezeigt.

Alternativ ist auch ein direkt das Bremsmoment bestimmender Sensor einsetzbar, dessen Messsignale der Signalelektronik des Umrichters zugeführt werden.

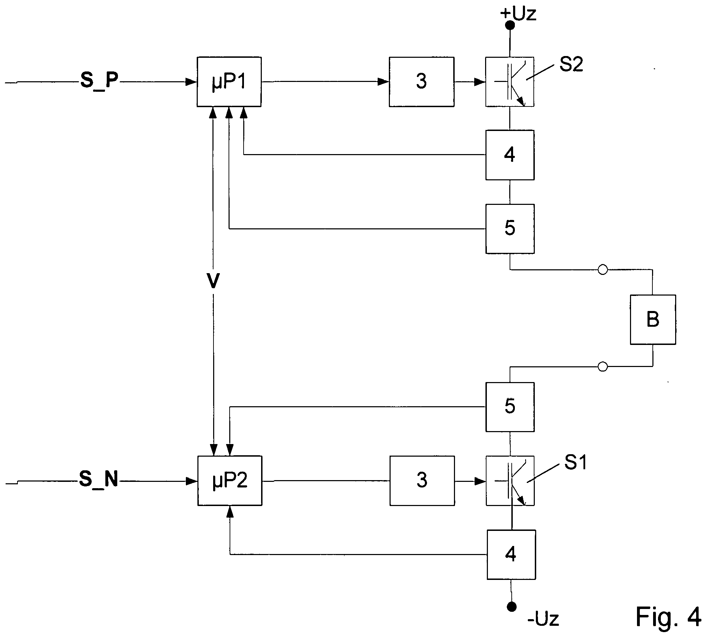

In der Figur 4 ist ein Beispiel der Bremsenansteuerung, das dem Beispiel der Figur 1 ähnelt, gezeigt, wobei die Sollwertvorgabe S_P durch den Sicheren Ausgang eines P-Schalters an den als Steuerung 1 ausgeführten Mikrocontroller µP1 und die Sollwertvorgabe S_N durch den Sicheren Ausgang eines N-Schalters zugeführt wird. Die Ansteuerung der Schalter S1 und S2 geschieht über Treiber 3. Die an der Bremse B anliegende Spannung wird mit Mitteln zu Spannungserfassung 5 erfasst, wobei die Messwerte zu den Potentialen der Anschlusspunkte der Bremse B den Mikrocontrollern µP1 und µP2 zugeführt werden. Die von den Schaltern S1 und S2 geschalteten Ströme werden mittels der Stromerfassung 4 erfasst. Die Speisung der Bremse B geschieht bei geschlossenen Schaltern S1 und S2 aus der Zwischenkreisspannung, die zwischen den Potentialen +Uz und -Uz besteht.

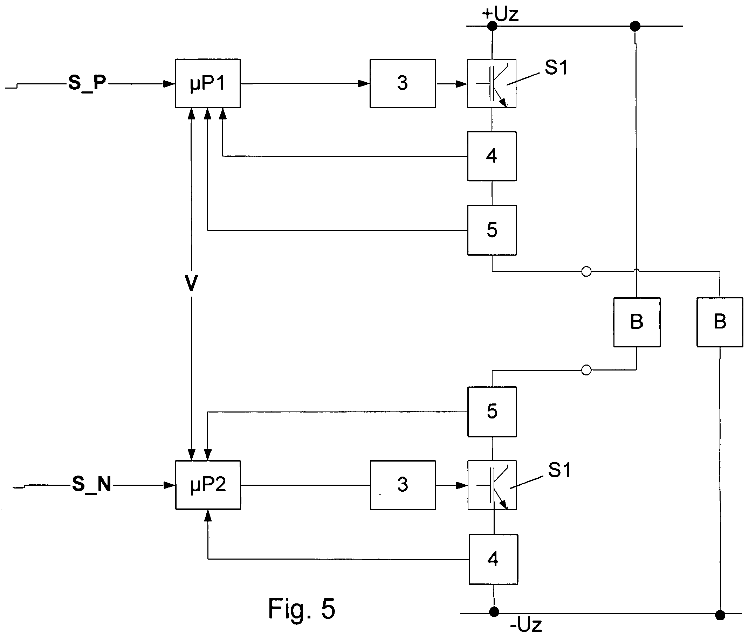

In der Figur 5 ist ein weiteres Beispiel der Bremsenansteuerung, das dem Beispiel der Figur 2 ähnelt, gezeigt, wobei die Sollwertvorgabe S_P durch den Sicheren Ausgang eines P-Schalters an den als Steuerung 1 ausgeführten Mikrocontroller µP1 und die Sollwertvorgabe S_N durch den Sicheren Ausgang eines N-Schalters zugeführt wird. Die Ansteuerung der Schalter S1 geschieht über Treiber 3. Die an der Bremse B anliegende Spannung wird mit Mitteln zu Spannungserfassung 5 erfasst, wobei die Messwerte zu den Potentialen der Anschlusspunkte der Bremse B den Mikrocontrollern µP1 und µP2 zugeführt werden. Die von den Schaltern S1 und S2 geschalteten Ströme werden mittels der Stromerfassung 4 erfasst. Die Speisung der Bremsen B geschieht bei geschlossenen Schaltern S1 aus der Zwischenkreisspannung, die zwischen den Potentialen +Uz und -Uz besteht.

### Bezugszeichenliste

- 1: Steuerung
- 2: Steuerung
- 3: Treiber
- 4: Strommessung
- 5: Spannungsmessung

- B: Bremse
- S: Sollwertvorgabe
- V: Vergleich

- S1: Schalter
- S2: Schalter
- S3: Schalter
- S4: Schalter
- S_P: Sollwertvorgabe durch Sicheren Ausgang (P-Schalter)
- S_N: Sollwertvorgabe durch Sicheren Ausgang (N-Schalter)

- +Uz: oberes Potential der Zwischenkreisspannung
- -Uz: unteres Potential der Zwischenkreisspannung
- +Br: oberes Potential der die Bremse B versorgenden Spannung
- -Br: unteres Potential der die Bremse B versorgenden Spannung

## Patentansprüche

1. Antriebsystem, umfassend einen Motor mit Rotorwelle umfasst, an der zumindest **zwei** zumindest eine bestrombare Bremsspule umfassende Bremsen (B) angeordnet sind, die von einer elektronischen Schaltung mit Strom beaufschlagbar sind, wobei die Spannungsversorgung ein oberes und ein unteres Potential, insbesondere Zwischenkreispotential eines Umrichters, aufweist,
wobei ein oberes und ein unteres Potential zur Versorgung einer Bremsspule vorgesehen ist,
wobei zwischen oberem Potential der Spannungsversorgung und oberem Potential zur Versorgung der Bremsspule ein von einer ersten Steuerschaltung ansteuerbarer erster Schalter (S2) angeordnet ist,
wobei zwischen unterem Potential der Spannungsversorgung und unterem Potential zur Versorgung der Bremsspule ein von einer zweiten Steuerschaltung ansteuerbarer zweiter Schalter (S1) angeordnet ist,
wobei eine Bremsspule einer ersten Bremsen (B) zwischen oberem Potential zur Spannungsversorgung und unterem Potential zur Versorgung der Bremsspule angeordnet ist,
wobei eine Bremsspule einer zweiten Bremsen (B) zwischen unterem Potential zur Spannungsversorgung und oberem Potential zur Versorgung der Bremsspule angeordnet ist,
wobei eine abwechselnde Funktionsüberprüfung der Bremsen (B) ausführbar ist, insbesondere indem Werte jeweils einer Zustandsgröße der jeweiligen Bremsen (B) bestimmt werden und den jeweiligen Steuerschaltungen zugeführt werden und/oder indem Werte der Winkelstellung der Rotorwelle bestimmt werden und den jeweiligen Steuerschaltungen zugeführt werden an Mittel zum Vergleichen mit Sollwerten oder Sollwerteverläufen,
**wobei eine dritte Bremsspule zwischen unterem und oberem Potential zur Versorgung der Bremsspule angeordnet ist, wobei von den Schaltern (S1, S2, S3, S4) Rückmeldesignalleitungen zu den die Schalter (S1, S2, S3, S4) jeweils ansteuernden Steuerschaltungen geführt sind, insbesondere so dass eine abwechselnde Funktionsüberprüfung der Schalter ausführbar ist.**

2. Antriebsystem nach Anspruch 1,
**dadurch gekennzeichnet, dass**
zumindest einer der beiden Schalter (S1, S2, S3, S4) oder beide Schalter (S1, S2, S3, S4) getaktet, insbesondere pulsweitenmoduliert, derart betreibbar sind, dass die an der Bremsspule anliegende Spannung steuerbar ist oder auf einen Sollwert hin regelbar ist, insbesondere wobei Mittel zur Spannungserfassung vorgesehen sind.

3. Antriebsystem nach mindestens einem der vorangegangenen Ansprüche,
**dadurch gekennzeichnet, dass**
der Motor ein Elektromotor ist, insbesondere ein umrichtergespeister Elektromotor, insbesondere ein dreiphasig betreibbarer Elektromotor, wie Asynchronmotor, Synchronmotor oder Reluktanzmotor.

4. Antriebsystem nach mindestens einem der vorangegangenen Ansprüche,
**dadurch gekennzeichnet, dass**
die Versorgungsspannung Zwischenkreisspannung eines Umrichters ist, aus der ein Wechselrichter des Umrichters versorgbar ist.

5. Antriebsystem nach mindestens einem der vorangegangenen Ansprüche,
**dadurch gekennzeichnet, dass**
die maximal zulässige Betriebsspannung der Bremsspule, insbesondere die dauerhaft maximal zulässige Betriebsspannung, kleiner ist als die Zwischenkreisspannung.

6. Antriebsystem nach mindestens einem der vorangegangenen Ansprüche,
**dadurch gekennzeichnet, dass**
die Steuerschaltungen zum Datenaustausch miteinander verbunden sind, insbesondere zum Vergleich von Parametern.

7. Antriebsystem nach mindestens einem der vorangegangenen Ansprüche,
**dadurch gekennzeichnet, dass**
die Bremsen (B) eine derartige elektromagnetisch betätigbare Bremsen (B) ist, dass bei Bestromen der Bremsspule die Bremsen (B) lüftet und bei Nicht-Bestromung die Bremsen (B) einfällt.

8. Antriebsystem nach mindestens einem der vorangegangenen Ansprüche,
**dadurch gekennzeichnet, dass**
ein Schalter (S1, S2, S3, S4) als steuerbarer Halbleiterschalter ausgeführt ist.

9. **Antriebsystem nach Anspruch 8,**
**dadurch gekennzeichnet, dass**
**ein Schalter (S1, S2, S3, S4) als IGBT oder MOSFET ausgeführt ist.**

10. Verfahren zum Betreiben eines Antriebs nach mindestens einem der vorangegangenen Ansprüche,
**dadurch gekennzeichnet, dass**
der Antrieb zumindest einen Motor, umfassend eine Rotorwelle, umfasst, die mit einem von zumindest zwei eine bestrombare Bremsspule umfassenden Bremsen (B) erzeugten Bremsmoment beaufschlagbar ist,
wobei die Bremsspule mit zwei Schaltern, mittels derer jeweils der Spulenstrom steuerbar ist, in Reihe angeordnet ist,
wobei der erste Schalter (S2) von einer ersten Steuerschaltung und der zweite Schalter (S1) von einer zweiten Steuerschaltung angesteuert wird,
wobei für die Herstellung des unbestromten Zustandes der Bremsspule die Schalter (S1, S2, S3, S4) geöffnet werden und zeitabschnittweise einer der beiden Schalter (S1, S2, S3, S4), insbesondere kurzzeitig, ein Steuersignal erhält zur Erreichung des geschlossenen Zustandes in diesem Zeitabschnitt,
wobei eine Überprüfung der Auswirkung dieses jeweiligen Steuersignals erfolgt und im Falle eines negativen Ergebnisses der Überprüfung
- eine Warninformation herausgegeben,
- und/oder der Antrieb in einen sicheren Zustand überführt wird,
- und/oder eine Abschaltung des Antriebs ausgeführt wird.

11. Verfahren nach Anspruch 10,
**dadurch gekennzeichnet, dass**
die Zustände beider Schalter (S1, S2, S3, S4) rückgemeldet werden an die den jeweiligen Schalter (S1, S2, S3, S4) ansteuernde Steuerschaltung und somit die Überprüfung der Auswirkung des jeweiligen Steuersignals mittels Überprüfung und/oder Vergleich des jeweiligen Rückmeldesignals mit dem jeweiligen Steuersignal ausgeführt wird.

12. Verfahren nach Anspruch 10 oder 11,
**dadurch gekennzeichnet, dass**
zur Überprüfung der Auswirkung des jeweiligen Steuersignals Werte einer Zustandsgröße zumindest der Bremsen (B) bestimmt werden, insbesondere Spulenstromwerte, an der Spule anliegende Spannungswerte, Magnetfeldwerte,
und/oder
zur Überprüfung der Auswirkung des jeweiligen Steuersignals Werte des an der Rotorwelle einwirkenden Drehmoments, insbesondere Bremsmoments, und/oder Winkelgeschwindigkeitswerte der Rotorwelle bestimmt werden,
und die bestimmten Werte an die jeweilige Steuerschaltung rückgemeldet werden.

13. Verfahren nach einem der Ansprüche 10 bis 12,
**dadurch gekennzeichnet, dass**
für die Herstellung des bestromten Zustandes der Bremsspule in einem ersten Zeitabschnitt ein erster der Schalter (S1, S2, S3, S4) geschlossen wird und ein zweiter zur Erreichung des getakteten Betriebs insbesondere zur Erreichung des pulsweitenmodulierten Betriebs, entsprechend getaktet angesteuert wird,
insbesondere wobei eine Überprüfung der Auswirkung dieses jeweiligen Steuersignals erfolgt und im Falle eines negativen Ergebnisses der Überprüfung
- eine Warninformation herausgegeben,
- und/oder der Antrieb in einen sicheren Zustand überführt wird,
- und/oder eine Abschaltung des Antriebs ausgeführt wird.

14. Verfahren nach einem der Ansprüche 10 bis 13,
**dadurch gekennzeichnet, dass**
für die Herstellung des bestromten Zustandes der Bremsspule in einem weiteren Zeitabschnitt der zweite der Schalter (S1, S2, S3, S4) geschlossen wird und der erste zur Erreichung des getakteten Betriebs, insbesondere zur Erreichung des pulsweitenmodulierten Betriebs, entsprechend getaktet angesteuert wird,
insbesondere wobei eine Überprüfung der Auswirkung dieses jeweiligen Steuersignals erfolgt und im Falle eines negativen Ergebnisses der Überprüfung
- eine Warninformation herausgegeben,
- und/oder der Antrieb in einen sicheren Zustand überführt wird,
- und/oder eine Abschaltung des Antriebs ausgeführt wird.

## Claims

1. Drive system comprising a motor having a rotor shaft on which at least two brakes (B) comprising at least one energisable brake coil are arranged, to which brakes current can be applied by an electronic circuit,
wherein the power supply has an upper and lower potential, in particular a DC link potential of a converter,
wherein an upper and lower potential are provided for feeding a brake coil,
wherein a first switch (S2), which can be actuated by a first control circuit, is arranged between the upper potential of the power supply and the upper potential for feeding the brake coil,
wherein a second switch (S1), which can be actuated by a second control circuit, is arranged between the lower potential of the power supply and the lower potential for feeding the brake coil,
wherein a brake coil of a first brake (B) is arranged between the upper potential for the power supply and the lower potential for feeding the brake coil,
wherein a brake coil of a second brake (B) is arranged between the lower potential for the power supply and the upper potential for feeding the brake coil,
wherein an alternating functional check can be carried out on the brakes (B), in particular by determining respective values of a state variable of each brake (B) and supplying them to the respective control circuits and/or by determining values of the angular position of the rotor shaft and supplying them to the respective control circuits, to means for performing comparisons with setpoints or setpoint curves,
wherein a third brake coil is arranged between the lower and upper potential for feeding the brake coil, wherein feedback signal lines are led from the switches (S1, S2, S3, S4) to the control circuits actuating the respective switches (S1, S2, S3, S4), in particular such that an alternating functional check can be carried out on the switches.

2. Drive system according to claim 1,
**characterised in that**
at least one of the two switches (S1, S2, S3, S4) or both switches (S1, S2, S3, S4) can be operated in a clocked manner, in particular in a pulse-width-modulated manner, such that the voltage applied to the brake coil can be controlled in an open-loop manner or automatically controlled towards a setpoint, means for voltage detection being provided in particular.

3. Drive system according to at least one of the preceding claims,
**characterised in that**
the motor is an electric motor, in particular a converter-fed electric motor, in particular an electric motor operable in a three-phase manner, such as an asynchronous motor, a synchronous motor or a reluctance motor.

4. Drive system according to at least one of the preceding claims,
**characterised in that**
the supply voltage is a DC link voltage of a converter, from which voltage an inverter of the converter can be fed.

5. Drive system according to at least one of the preceding claims,
**characterised in that**
the maximum permitted operating voltage of the brake coil, in particular the long-term maximum permitted operating voltage, is lower than the DC link voltage.

6. Drive system according to at least one of the preceding claims,
**characterised in that**
the control circuits are interconnected for data exchange, in particular for comparing parameters.

7. Drive system according to at least one of the preceding claims,
**characterised in that**
the brakes (B) are electromagnetically operable brakes (B) such that the brakes (B) are released when current is applied to the brake coil and the brakes (B) are applied when no current is applied.

8. Drive system according to at least one of the preceding claims,
**characterised in that**
one switch (S1, S2, S3, S4) is configured as a controllable semiconductor switch.

9. Drive system according to claim 8,
**characterised in that**
one switch (S1, S2, S3, S4) is configured as an IGBT or a MOSFET.

10. Method for operating a drive according to at least one of the preceding claims,
**characterised in that**
the drive comprises at least one motor comprising a rotor shaft to which it is possible to apply a braking torque generated by at least two brakes (B) comprising an energisable brake coil,
wherein the brake coil is arranged in series with two switches, by means of each of which the coil current can be controlled in an open-loop manner,
wherein the first switch (S2) is actuated by a first control circuit and the second switch (S1) is actuated by a second control circuit,
wherein, in order to establish the de-energised state, the switches (S1, S2, S3, S4) are opened, and one of the two switches (S1, S2, S3, S4) receives a control signal for a certain time period, in particular briefly, in order to reach the closed state within this time period, wherein the action of the particular control signal is checked, and if the result of the check is negative
- alert information is output
- and/or the drive is transferred to a safe state
- and/or the drive is switched off.

11. Method according to claim 10,
**characterised in that**
the states of the two switches (S1, S2, S3, S4) are fed back to the control circuits actuating the particular switch (S1, S2, S3, S4) and thus the action of the particular control signal is checked by checking and/or comparing the particular feedback signal with the particular control signal.

12. Method according to either claim 10 or claim 11,
**characterised in that**
to check the action of the particular control signal, values of a state variable at least of the brakes (B) are determined, in particular coil current values, voltage values applied to the coil and magnetic field values,
and/or
to check the action of the particular control signal, values of the torque acting on the rotor shaft, in particular the braking torque, and/or angular velocity values of the rotor shaft are determined
and the determined values are fed back to the particular control circuit.

13. Method according to any of claims 10 to 12,
**characterised in that**
to establish the energised state of the brake coil in a first time period, a first of the switches (S1, S2, S3, S4) is closed, and to reach the clocked mode, in particular to reach the pulse-width-modulated mode, a second switch is accordingly actuated in a clocked manner,
the action of the particular control signal in particular being checked, and if the result of the check is negative
- alert information is output
- and/or the drive is transferred to a safe state
- and/or the drive is switched off.

14. Method according to any of claims 10 to 13,
**characterised in that**
to establish the energised state of the brake coil in a further time period, the second of the switches (S1, S2, S3, S4) is closed, and to reach the clocked mode, in particular to reach the pulse-width-modulated mode, the first switch is accordingly actuated in a clocked manner, the action of the particular control signal in particular being checked, and if the result of the check is negative
- alert information is output
- and/or the drive is transferred to a safe state
- and/or the drive is switched off.

## Revendications

1. Système d'entraînement, comprenant un moteur avec un arbre de rotor sur lequel sont disposés aux moins deux freins (B) comprenant au moins une bobine de freinage pouvant être mise sous tension, qui peuvent être alimentés en courant par un circuit électronique,
sachant que l'alimentation électrique présente un potentiel supérieur et un potentiel inférieur, en particulier un potentiel de circuit intermédiaire d'un convertisseur,
sachant qu'un potentiel supérieur et un potentiel inférieur sont prévus pour l'alimentation d'une bobine de freinage,
sachant qu'un premier commutateur (S2), pouvant être asservi par un premier circuit de commande, est disposé entre le potentiel supérieur de l'alimentation électrique et le potentiel supérieur pour l'alimentation de la bobine de freinage,
sachant qu'un deuxième commutateur (S1), pouvant être asservi par un deuxième circuit de commande, est disposé entre le potentiel inférieur de l'alimentation électrique et le potentiel inférieur pour l'alimentation de la bobine de freinage,
sachant qu'une bobine de freinage d'un premier frein (B) est disposée entre le potentiel supérieur pour l'alimentation électrique et le potentiel inférieur pour l'alimentation de la bobine de freinage,
sachant qu'une bobine de freinage d'un deuxième frein (B) est disposée entre le potentiel inférieur pour l'alimentation électrique et le potentiel supérieur pour l'alimentation de la bobine de freinage,
sachant qu'un contrôle de fonctionnement en alternance des freins (B) peut être effectué, en particulier par le fait qu'on détermine des valeurs d'une variable d'état respective des freins respectifs (B) et qu'on les apporte aux circuits de commande respectifs, et/ou par le fait qu'on détermine des valeurs de la position angulaire de l'arbre de rotor et qu'on les apporte aux circuits de commande respectifs, à des moyens pour les comparer à des valeurs de consigne ou des allures de valeurs de consigne,
sachant qu'une troisième bobine de freinage est disposée entre le potentiel inférieur et le potentiel supérieur pour l'alimentation de la bobine de freinage, sachant que des lignes de signaux d'acquittement sont dirigées des commutateurs (S1, S2, S3, S4) aux circuits de commande commandant respectivement les commutateurs (S1, S2, S3, S4), en particulier de telle sorte qu'un contrôle de fonctionnement en alternance des commutateurs peut être effectué.

2. Système d'entraînement selon la revendication 1, **caractérisé en ce qu'**au moins un des deux commutateurs (S1, S2, S3, S4) ou les deux commutateurs (S1, S2, S3, S4) peuvent être exploités à impulsions, en particulier à modulation de largeur d'impulsions, de telle sorte que la tension appliquée à la bobine de freinage peut être commandée ou régulée vers une valeur de consigne, sachant en particulier que des moyens sont prévus pour enregistrer la tension.

3. Système d'entraînement selon au moins une des revendications précédentes, **caractérisé en ce que** le moteur est un moteur électrique, en particulier un moteur électrique alimenté par convertisseur, en particulier un moteur électrique pouvant être exploité en triphasé, comme un moteur asynchrone, un moteur synchrone ou un moteur à réluctance.

4. Système d'entraînement selon au moins une des revendications précédentes, **caractérisé en ce que** la tension d'alimentation est la tension de circuit intermédiaire d'un convertisseur, à partir de laquelle peut être alimenté un onduleur du convertisseur.

5. Système d'entraînement selon au moins une des revendications précédentes, **caractérisé en ce que** la tension de service maximale admissible de la bobine de freinage, en particulier la tension de service durablement maximale admissible, est inférieure à la tension de circuit intermédiaire.

6. Système d'entraînement selon au moins une des revendications précédentes, **caractérisé en ce que** les circuits de commande sont reliés entre eux pour l'échange de données, en particulier pour la comparaison de paramètres.

7. Système d'entraînement selon au moins une des revendications précédentes, **caractérisé en ce que** les freins (B) sont freins (B) pouvant être actionné par voie électromagnétique de telle sorte que les freins (B) se desserrent lorsque la bobine de freinage est mise sous tension et que le frein (B) s'engage lorsqu'elle n'est pas sous tension.

8. Système d'entraînement selon au moins une des revendications précédentes, **caractérisé en ce qu'**un commutateur (S1, S2, S3, S4) est réalisé sous forme de commutateur à semi-conducteur pouvant être commandé.

9. Système d'entraînement selon la revendication 8, **caractérisé en ce qu'**un commutateur (S1, S2, S3, S4) est réalisé sous forme de transistor bipolaire à porte isolée (IGBT) ou de transistor à effet de champ à semi-conducteur à oxyde métallique (MOSFET).

10. Procédé pour faire fonctionner un entraînement selon au moins une des revendications précédentes, **caractérisé en ce que** l'entraînement comprend au moins un moteur, comprenant un arbre de rotor qui peut être sollicité par un couple de freinage produit par au moins deux freins (B) comprenant une bobine de freinage pouvant être mise sous tension,
sachant que la bobine de freinage est disposée en série avec deux commutateurs au moyen desquels peut être respectivement commandé le courant de bobine,
sachant que le premier commutateur (S2) est asservi par un premier circuit de commande et que le deuxième commutateur (S1) est asservi par un deuxième circuit de commande, sachant que, pour réaliser l'état hors tension de la bobine de freinage, les commutateurs (S1, S2, S3, S4) sont ouverts et un des deux commutateurs (S1, S2, S3, S4) reçoit pendant une période, en particulier de courte durée, un signal de commande afin de prendre l'état de fermeture pendant cette période,
sachant qu'un contrôle de l'effet de ce signal de commande respectif est effectué et qu'en cas de résultat négatif du contrôle
- une information d'avertissement est délivrée,
- et/ou l'entraînement est transféré dans un état sûr,
- et/ou l'entraînement est désactivé.

11. Procédé selon la revendication 10, **caractérisé en ce que** les états des deux commutateurs (S1, S2, S3, S4) sont acquittés au circuit de commande asservissant le commutateur respectif (S1, S2, S3, S4), et le contrôle de l'effet du signal de commande respectif est effectué en contrôlant et/ou en comparant le signal d'acquittement respectif par rapport au signal de commande respectif.

12. Procédé selon la revendication 10 ou 11, **caractérisé en ce que** pour contrôler l'effet du signal de commande respectif, on détermine des valeurs d'une variable d'état au moins des freins (B), en particulier des valeurs de courant de bobine, des valeurs de tension appliquée à la bobine, des valeurs de champ magnétique,
et/ou
pour contrôler l'effet du signal de commande respectif, on détermine des valeurs du couple de rotation agissant sur l'arbre de rotor, en particulier du couple de freinage, et/ou des valeurs de vitesse angulaire de l'arbre de rotor,
et les valeurs déterminées sont acquittées au circuit de commande respectif.

13. Procédé selon l'une des revendications 10 à 12, **caractérisé en ce que**, pour réaliser l'état sous tension de la bobine de freinage pendant une première période, un premier des commutateurs (S1, S2, S3, S4) est fermé et un deuxième est asservi à impulsions d'une manière correspondante afin d'atteindre le fonctionnement à impulsions, en particulier afin d'atteindre le fonctionnement à modulation de largeur d'impulsions, sachant en particulier qu'un contrôle de l'effet de ce signal de commande respectif est effectué et qu'en cas de résultat négatif du contrôle
- une information d'avertissement est délivrée,
- et/ou l'entraînement est transféré dans un état sûr,
- et/ou l'entraînement est désactivé.

14. Procédé selon l'une des revendications 10 à 13, **caractérisé en ce que**, pour réaliser l'état sous tension de la bobine de freinage pendant une autre période, le deuxième des commutateurs (S1, S2, S3, S4) est fermé et le premier est asservi à impulsions d'une manière correspondante afin d'atteindre le fonctionnement à impulsions, en particulier afin d'atteindre le fonctionnement à modulation de largeur d'impulsions, sachant en particulier qu'un contrôle de l'effet de ce signal de commande respectif est effectué et qu'en cas de résultat négatif du contrôle
- une information d'avertissement est délivrée,
- et/ou l'entraînement est transféré dans un état sûr,
- et/ou l'entraînement est désactivé.
